# EUROPEAN PATENT SPECIFICATION

(11) **EP 3 363 657 B1**
(45) Date of publication and mention of the grant of the patent: **01.04.2020**
(21) Application number: 16855543.1
(22) Date of filing: 14.10.2016
(51) Int. Cl.: B60C 11/16

(54) **TIRE**
REIFEN
PNEU

(30) Priority: 16.10.2015 JP 2015204945
(43) Date of publication of application: 22.08.2018
(73) Proprietor: Bridgestone Corporation, Tokyo 104-8340 (JP)
(72) Inventor: WADA, Junichiro, Tokyo 104-8340 (JP); ITO, Tomoaki, Tokyo 104-8340 (JP)
(74) Representative: Oxley, Robin John George
(86) International application number: PCT/JP2016/080590
(87) International publication number: WO 2017/065290

(56) References cited:
- WO-A1-2015/098547
- WO-A1-2015/152250
- FR-A1- 2 438 552
- JP-A- 2010 070 052
- JP-A- 2013 180 641
- JP-A- 2013 180 641
- JP-A- 2015 085 724
- JP-A- 2015 217 621
- KR-A- 20050 014 582
- RU-C2- 2 292 269
- US-A- 3 842 880

## Description

### BACKGROUND OF THE INVENTION

### 1. Field of the Invention

The present invention relates to a tire having stud holes for stud insertion on the surface side of the tread.

### 2. Description of the Related Art

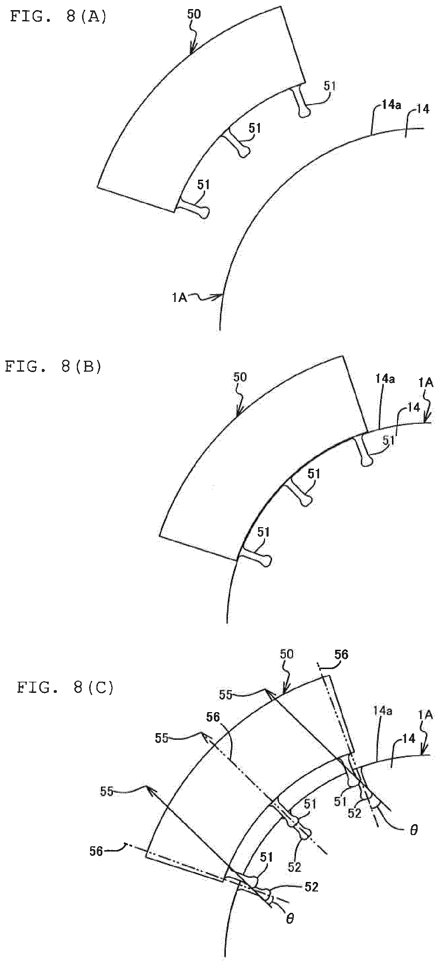

Studdable tires (sometimes called "spiked tires") are manufactured as follows. As shown in FIG. 8, the tire 1A is cured with the stud hole molding projections 51, which protrude from the tire mold 50, inserted from the surface 14a side of the tread 14 of the pre-curing tire 1A into the inside of the tread 14 (see FIGS. 8A and 8B) . Then, after the curing of the tire 1A, not-shown studs are driven into the stud holes 52 formed by demolding (removing) the stud hole molding projections 51 from the tread 14. Then the studs are driven into the stud holes 52 in such a manner that one side of each stud protrudes from the surface 14a of the tread 14 of the tire.

The tire mold 50 used is one divided into nine segments along the tire circumferential direction, for instance.

Also, the stud hole molding projections 51 are all formed in a shape corresponding to the shape of the stud holes 52 to be molded.

The stud holes 52 each have an opening side part opening on the surface 14a of the tread 14 and a bottom side part. The opening side part has an opening area formed in a reverse cone shape with the diameter thereof gradually smaller from the surface 14a of the tread 14 toward the hole bottom surface and a middle area cylindrical in shape connecting the opening area to the bottom side part.

The stud hole molding projections 51 each have the head side thereof for molding the bottom side part of the stud hole 52 larger in diameter than the middle part thereof for molding the middle area of the stud hole 52. Hence, in the demolding of the tire mold 50, cracks can develop in the tread rubber from the inner peripheral surface of the stud hole 52, caused by the resistance that works when pulling the stud hole molding projections 51 out of the tread 14. In particular, the stud hole molding projections 51 closer to the ends of the tire mold segment 50 in the tire circumferential direction tend to have greater displacement angle *θ* of the demolding direction 55 of the stud hole molding projections 51 with respect to the central axis 56 of the stud hole 52 as shown in FIG. 8C. And this makes the demolding harder to execute, thus causing cracks in the tread rubber.

This requires us to come up with the shape of the stud hole molding projections 51 which makes demolding easier.

However, making the shape of the stud hole molding projections 51 easier to demold can make the loss of studs fitted in the stud holes easier, too.

That is, in use, the studdable tires are desirable if they feature good anti-stud-loss performance, which makes the loss of studs harder to occur. In the curing of the tires, however, they are desired to show good demolding performance, which makes the demolding of the stud hole molding projections 51 from the tread 14 easier without causing cracks in the tread rubber at the time of demolding.

However, the anti-stud-loss performance and the demolding performance are mutually exclusive performances, and it has been difficult to satisfy both the performances at the same time.

Known in the art is stud holes for stud insertion provided on the surface side of the tread of a tire, which have each an opening side part opening on the surface of the tread and a bottom side part. And the inner peripheral surface of the bottom side part is formed in a curved surface swelling outward away from the central axis of the stud hole, and the maximum diameter position of the inner peripheral surface of the bottom side part is located on the side of the opening side part of the intermediate position between the boundary position of the opening side part and the bottom side part and the hole bottom surface (see Patent Document 1).

### RELATED ART DOCUMENT

### Patent Document

Patent Document 1: Japanese Unexamined Patent Application Publication No. 2010-70052
Reference is also made to FR 2438552 and JP 2013-180641, which each disclose a tire according to the preamble of Claim 1 and to US 3842880.

### SUMMARY OF THE INVENTION

### Problem to be Solved by the Invention

The stud hole as disclosed in Patent Document 1 has the maximum diameter position of the inner peripheral surface of the bottom side part on the side of the opening side part of the intermediate position between the boundary position of the opening side part and the bottom side part and the hole bottom surface. As a result, the distance between the maximum diameter position and the boundary position is short. At the inner peripheral surface of the bottom side part closer to the opening side part, therefore, the curvature radius of the curved surface connecting the maximum diameter position and the boundary position along the central axis of the stud hole is small. This will increase the withdrawal resistance at the removal (demolding) of the stud hole molding projections, making the demolding difficult.

The present invention provides tires with stud holes which make it easy for the stud hole molding projections to be demolded from the tread at the time of tire curing and make it hard for the studs fitted in the stud holes to fall out of them, that is, tires with stud holes for stud insertion on the surface of the tread, which feature both good demolding performance and good anti-stud-loss performance at the same time.

### MEANS FOR SOLVING THE PROBLEM

The tire according to the present invention is set out in Claim 1 and has stud holes for stud insertion on the surface side the tread. The stud holes each have an opening side part on one side along the central axis of the stud hole, which opens on the surface of the tread, and a bottom side part on the other side along the central axis of the stud hole. The inner peripheral surface of the bottom side part is formed in a curved surface swelling outward away from the central axis of the stud hole, and the maximum diameter position of the inner peripheral surface of the bottom side part is located on the hole bottom surface side of the intermediate position between the boundary position of the opening side part and the bottom side part and the hole bottom surface. This makes the curvature radius of the opening-side curved surface along the central axis of the stud hole located between the boundary position and the maximum diameter position greater than the curvature radius of the bottom-side curved surface along the central axis of the stud hole located between the maximum diameter position and the bottom surface of the stud hole. Accordingly, the withdrawal resistance of the stud hole molding projections can be reduced when the stud hole molding projections are pulled out from the opening-side curved surface which has a greater curvature radius in the bottom side part of the stud hole. As a result, it is easier to remove (demold) the stud hole molding projections, which prevents cracks from occurring in the tread. On the other hand, the curved surface on the bottom side with a smaller curvature radius in the bottom side part of the stud hole increases the holding force for holding the flange of the stud fitted in the stud hole. This makes it harder for the studs to fall out of the stud holes in the studdable tires in use. In other words, a tire featuring both good demolding performance at curing and good anti-stud-loss performance in use can be provided. The scope of the invention is defined by the appended claim.

### BRIEF DESCRIPTION OF THE DRAWINGS

FIG. 1A is a plan view of a stud hole. FIG. 1B is a cross-sectional view of a stud hole.
FIG. 2A is a plan view of a stud. FIG. 2B is a cross-sectional view of a stud.
FIG. 3 is a cross-sectional view of a studdable tire.
FIG. 4 is illustrations showing how a stud is inserted in a stud hole.
FIG. 5 is tables showing test results.
FIG. 6 is tables showing test results.
FIG. 7 is tables showing test results.
FIG. 8 is illustrations for explaining how a tire mold is demolded.

### BEST MODE FOR CARRYING OUT THE INVENTION

Hereinafter, the invention will be described based on preferred embodiments which do not intend to limit the scope of the claims of the present invention. Not all of the combinations of the features described in the embodiments are necessarily essential to the solutions proposed by the invention.

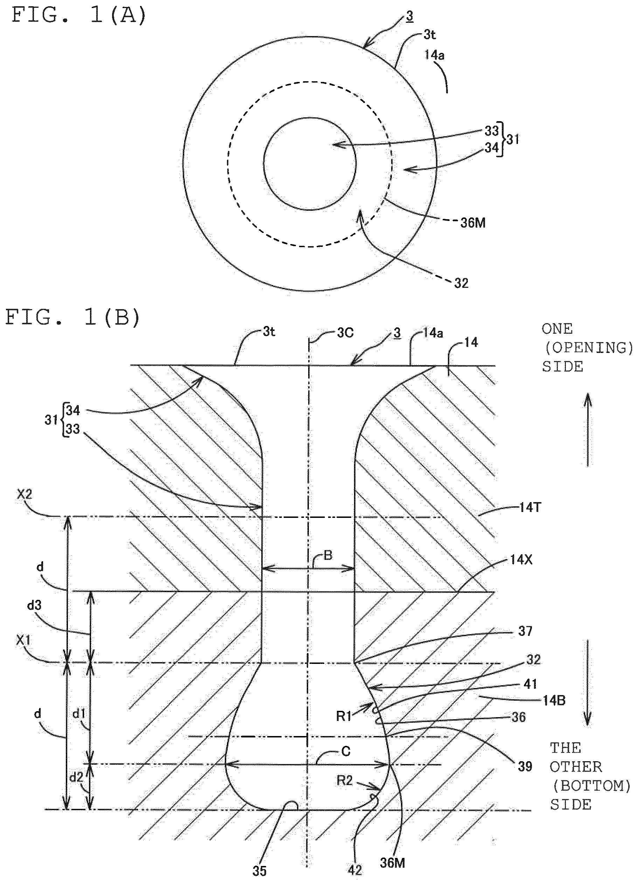

Referring to FIGS. 1 to 4, a description is given of a structure of a studdable tire (sometimes called "spiked tire") 10.

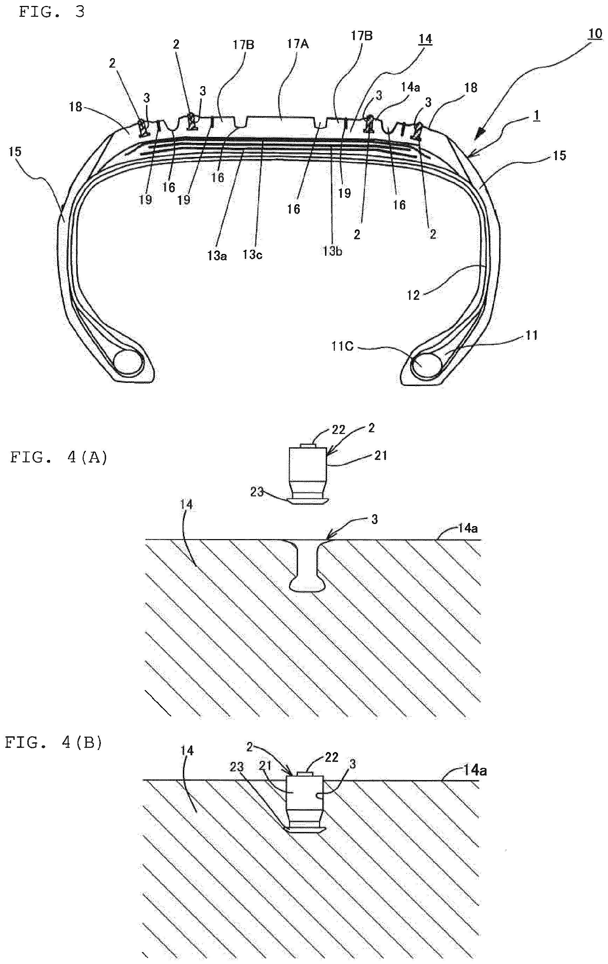

As shown in FIG. 3, the studdable tire 10 is comprised of a tire 1 having stud holes (stud recesses) 3 for insertion of studs (sometimes called spike pins) 2 on the surface side 14a of the tread 14 and studs 2 inserted in the stud holes 3 of the tire 1.

As shown in FIG. 3, the tire 1 includes beads 11, bead cores 11C, a carcass layer 12, belt layers 13a, 13b, a tread 14, sidewalls 15, and stud holes 3.

The carcass layer 12 is a framework member disposed astride a pair of bead cores 11C disposed in the beads 11. The inside belt layer 13a and the outside belt layer 13b are disposed on the radially outside of the crown region of the carcass layer 12. The belt layers 13a and 13b are respectively formed with steel cords or stranded cords of organic fiber crossed at an angle of 20 to 70 degrees with respect to the equator of the tire. Therefore, the extension direction of the cords of the belt layer 13a located radially inside of the tire is crossed with the extension direction of the cords of the belt layer 13b located radially outside of the tire.

The tread 14 is a rubber member (tread rubber) disposed radially outside of the belt layers 13a, 13b. Formed in the surface 14a of the tread 14 are diagonal main lug grooves 16 provided to extend diagonally with respect to the circumferential direction and the axial direction of the tire. These diagonal main lug grooves 16 define a plurality of land portions (blocks) 17A, 17B, and 18. The land portions 17A are central land portions located in the tire center. The land portions 17B are outer land portions located axially outside of the central land portions 17A. And the land portions 18 are shoulder-side land portions located axially outside of the outer land portions 17B, respectively.

Formed on the surface of the land portions 17A, 17B, and 18 are a plurality of sipes 19.

The sidewalls 15 are rubber members extending in the side regions of the tire from the ends of the tread 14 covering the carcass layer 12.

Provided between the tread 14 and the outer belt layer 13b is a belt protection layer 13c which prevents the studs 2 sinking due to the collapse of the rubber below the studs 2 (radially inside of the tire) from piercing the outer belt layer 13b. The belt protection layer 13c is structured with cords of organic fiber or the like.

The stud holes 3 are formed in the shoulder-side land portions 18 and the outer land portions 17B, for instance.

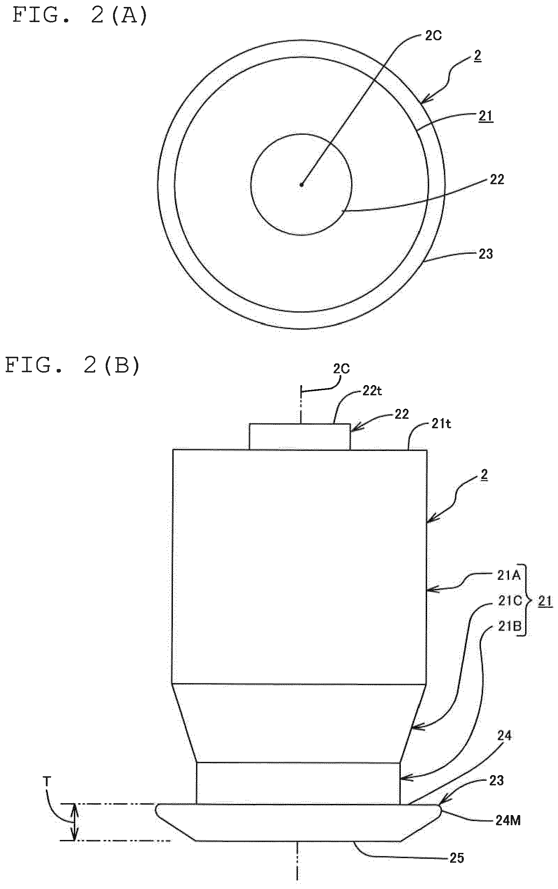

As shown in FIG. 2, the stud 2, having a body section 21, a pin section 22 disposed at one end along the central axis of the body section 21, and a flange section 23 disposed at the other end along the central axis of the body section 21, is a cylindrical member long along the central axis of the body section 21.

The stud 2 is formed such that the central axis of the body section 21, the central axis of the pin section 22, and the central axis of the flange section 23 are aligned in a continuous straight line. And the continuous straight line constitutes the central axis 2C of the stud 2 (hereinafter referred to simply as "central axis 2C").

The body section 21 has an upper part 21A located on the one-end side along the central axis 2C, an lower part 21B located on the other-end side along the central axis 2C, and a middle part 21C connecting the upper part 21A and the lower part 21B.

The upper part 21A is formed in a cylindrical body having an equal shape of cross section orthogonal to the central axis 2C for the whole length along the central axis 2C.

The lower part 21B is formed in a cylindrical body having an equal shape of cross section orthogonal to the central axis 2C for the whole length along the central axis 2C.

The relationship between the sectional diameter of the upper part 21A and the sectional diameter of the lower part 21B is such that "sectional diameter of upper part 21A > sectional diameter of lower part 21B".

The middle part 21C is formed in an inverted-cone-shape body whose diameter of cross section orthogonal to the central axis 2C gets gradually smaller from the upper part 21A side to the lower part 21B side.

The top-end surface 21t of the body section 21 is formed in a flat surface orthogonal to the central axis 2C or a curved (convex) surface rising toward one end along the central axis 2C or a curved (concave) surface sinking toward the other end along the central axis 2C, for instance.

The pin section 22 is formed in a cylindrical body having an equal shape of cross section orthogonal to the central axis 2C for the whole length.

The top-end surface 22t of the pin section 22 is formed in a flat surface orthogonal to the central axis 2C or a curved (convex) surface rising toward one end along the central axis 2C or a curved (concave) surface sinking toward the other end along the central axis 2C, for instance.

The flange section 23 is so formed as to have the diameter being the greatest at the outer peripheral surface 24 and reducing from the one-end side toward the other-end side along the central axis 2C to connect to the other-end surface. And the maximum peripheral diameter position 24M of the outer peripheral surface 24 of the flange section 23 is located on the pin section 22 side of the position which is at 1/2 of the thickness T of the flange section along the central axis 2C.

As shown in FIG. 4, the stud 2 is embedded with the flange section 23 on the other-end side thereof first into the stud hole 3 formed in the surface 14a side of the tread 14 of the tire 1 driven by a not-shown stud driving machine.

The height of the stud 2 is formed greater than the depth of the stud hole 3. And thus a studdable tire 10 is made with the studs 2 embedded in the surface 14a side of the tread 14 such that the pin section 22, which is the one-end side of the stud 2, protrudes from the surface 14a side of the tread 14.

As shown in FIG. 1B, the stud hole 3 is formed as a hole extending from the surface 14a side of the tread 14 of the tire 1 toward the center (center axis of rotation of the tire 1) in the circle of the tire 1.

The stud hole 3 has an opening side part 31 opening on the surface 14a of the tread 14 provided on the one-end side along the central axis 3C of the stud hole 3 and a bottom-side part 32 provided on the other-end side along the central axis 3C of the stud hole 3.

It is to be noted that the central axis 3C of the stud hole 3 refers to the central axis of the hole extending in the tire radial direction of the hole for stud 2 insertion or diagonal with respect to the tire radial direction, that is, the central axis passing through the median point in the cross-sectional shape of the hole orthogonal to the tire diameter direction (virtual median point in the cross-sectional shape of the hole which is actually a space).

The opening side part 31 is formed as a funnel-shaped hole. That is, the opening side part 31 has an opening area 34 formed in an inverted cone shape whose diameter reduces gradually from the surface 14a side of the tread 14 toward the hole bottom surface 35 of the stud hole 3 and a middle area 33 cylindrical in shape connecting the opening area 34 to the bottom side part 32.

The cross-sectional shape of the inner peripheral surface 36 of the stud hole 3 intersecting with the plane orthogonal to the central axis 3C of the stud hole 3 is a circle.

Also, the boundary between the inner peripheral surface (inner wall surface) 36 of the stud hole 3 and the hole bottom surface 35 of the stud hole 3 is formed in a curved surface.

The hole bottom surface 35 of the stud hole 3 is a surface forming the flat surface of the bottom of the stud hole 3. It is formed as a flat surface orthogonal to the central axis 3C at the deepest position of the stud hole 3.

The size relationship between the opening diameter of the opening 3t of the opening area 34 opening on the surface 14a of the tread 14, the cross-sectional diameter of the middle area 33, and the cross-sectional diameter of the bottom side part 32 is such that "opening diameter of the opening 3t of the opening area 34 > cross-sectional diameter of the bottom side part 32 > cross-sectional diameter of the middle area 33".

The stud holes 3 are molded by curing the tire with the not-shown stud hole molding projections corresponding in shape to the stud holes 3 inserted in the tread of the tire before curing and removing (demolding) the stud hole molding projections out of the tread after the curing of the tire.

The surface of the inner peripheral surface 36 of the bottom side part 32 extending along the central axis 3C of the stud hole 3 is formed in a curved surface swelling outward away from the central axis 3C.

And the position 36M of the maximum diameter C in the cross section of the inner peripheral surface 36 of the bottom side part 32 intersecting with a plane orthogonal to the central axis 3C of the stud hole 3 is located on the hole bottom surface 35 side of the intermediate position 39 between the boundary position 37 of the opening side part 31 and the bottom side part 32 and the hole bottom surface 35.

Also, the inner peripheral surface 36 of the bottom side part 32 is formed such that the curvature radius R1 of the opening-side curved surface 41, which is positioned between the maximum diameter C position 36M and the boundary position 37 and curved along the central axis 3C of the stud hole 3 is greater than the curvature radius R2 of the bottom-side curved surface 42, which is positioned between the maximum diameter C position 36M and the hole bottom surface 35 of the bottom side part 32 and curved along the central axis 3C of the stud hole 3.

In other words, it is so arranged that the curvature radius of the bottom-side curved surface 42 is greater than the curvature radius of the opening-side curved surface 41 (the curve of the bottom-side curved surface 42 being more acute than the curve of the opening-side curved surface 41).

It is to be noted that the curvature radii of the inner peripheral surfaces and curved surfaces mentioned herein refer to the curvature radii of line segments running along the lateral surfaces in the depth direction of the stud hole 3 when the cross section of the stud hole 3 including the central axis 3C of the stud hole 3 is viewed from the side.

In this manner, the maximum diameter C position 36M of the inner peripheral surface 36 of the bottom side part 32 is located on the hole bottom surface 35 side of the intermediate position 39 between the boundary position 37 of the opening side part 31 and the bottom side part 32 and the hole bottom surface 35. Therefore, the inner peripheral surface 36 closer to the opening side part 31 of the bottom side part 32 of the stud hole 3 can be formed such that the curvature radius R1 of the curved surface (opening-side curved surface 41) extending along the central axis 3C of the stud hole 3 positioned between the maximum diameter C position 36M and the boundary position 37 in such a manner as to connect the boundary position 37 to the maximum diameter C position 36M is greater than the curvature radius R2 of the curved surface (bottom-side curved surface 42) extending along the central axis 3C of the stud hole 3 positioned between the maximum diameter C position 36M and the hole bottom surface 35 in such a manner as to connect the hole bottom surface 35 of the stud hole 3 to the maximum diameter C position 36M. As a result, it is possible to reduce the withdrawal resistance of the stud hole molding projections 51 when they are pulled out from the opening-side curved surface 41 with a larger curvature radius extending along the central axis 3C of the stud hole 3 positioned between the maximum diameter C position 36M and the boundary position 37. This makes it easier to remove (demold) the stud hole molding projections 51 and thus prevents cracks from occurring in the tread 14. On the other hand, the bottom-side curved surface 42 with a smaller curvature radius on the bottom side extending along the central axis 3C of the stud hole 3 positioned between the maximum diameter C position 36M and the hole bottom surface 35 increases the holding force for holding the flange section 23 of the stud 2 fitted in the stud hole 3. This makes it harder for the studs 2 to fall out of the stud holes 3 in the studdable tires 10 in use. That is, a tire featuring both good demolding performance at curing and good anti-stud-loss performance in use can be provided. In other words, the tire 1 can be provided with stud holes 3 featuring good anti-stud-loss performance, which are molded using stud hole molding projections featuring good demolding performance.

It is to be noted that the stud holes 3 featuring both good demolding performance and good anti-stud-loss performance can be formed when the positional range of the maximum diameter C position 36M = d2 = d1/d is 0.5 < d1/d < 0.9, or more preferably, 0.5 < d1/d < 0.7, where d is the distance between the hole bottom surface 35 and the boundary position 37, or the height of the bottom side part 32, d1 is the distance between the boundary position 37 and the maximum diameter C position 36M, and d2 is the distance between the hole bottom surface 35 and the maximum diameter C position 36M. As a result, stud holes 3 featuring both good demolding performance and good anti-stud-loss performance can be formed.

Also, the value range selected for the ratio C/B between the maximum diameter C of the bottom side part 32 and the diameter B of the middle area 33 is 1.0 ≦ C/B ≦ 1.6. Accordingly, stud holes 3 featuring both good demolding performance and good anti-stud-loss performance can be formed. Too small C/B will compromise anti-stud-loss performance, whereas too large C/B will compromise demolding performance. In the preferred embodiment, therefore, 1.0 ≦ C/B ≦ 1.6 is employed because C/B smaller than 1.0 was found to lower anti-stud-loss performance and C/B larger than 1.6 to lower demolding performance.

The value range selected for the ratio R1/R2 between the curvature radius R1 of the opening-side curved surface 41 and the curvature radius R2 of the bottom-side curved surface 42 is 1.5 ≦ R1/R2 ≦ 100, and more preferably 2 ≦ R1/R2 ≦ 10.

The curvature radius R2 of the bottom-side curved surface 42, when it is small, little affects the demolding performance. But too small a curvature radius R2 may turn the bottom-side curved surface 42 into a sharply-angled corner, and cracks can run from the corner portion. On the other hand, too large a curvature radius R2 may result in an insufficient holding force for holding the flange section 23 of the stud 2, thus compromising the anti-stud-loss performance.

Therefore, the curvature radius R1 of the opening-side curved surface 41 is set in such a manner as to improve the demolding performance. And at the same time, in the relationship with the curvature radius R1, the value range selected for the ratio R1/R2 is 1.5 ≦ R1/R2 ≦ 100, and more preferably 2 ≦ R1/R2 ≦ 10. This enables the formation of stud holes 3 featuring both good demolding performance and good anti-stud-loss performance.

That is, if R1/R2 is smaller than 1.5, the anti-stud-loss performance will be compromised. And if R1/R2 is larger than 100, then the bottom-side curved surface 42 will be turned into a sharply-angled corner, and cracks may be more likely to occur from the corner portion. Thus, the value range is selected such that 1.5 ≦ R1/R2 ≦ 100. And to obtain stud holes 3 capable of improving the anti-stud-loss performance and preventing the occurrence of cracks, the value range selected for R1/R2 is 2 ≦ R1/R2 ≦ 10.

Also, the hole bottom surface 35 is formed as a flat surface orthogonal to the central axis 3C. This improves the molding accuracy of stud holes 3 by raising the stability of placement of the stud hole molding projections relative to the tread before curing.

The tread 14 is comprised of a base rubber layer 14B disposed on the radially outer side of the belt layers 13a, 13b and a top rubber layer 14T placed on the base rubber layer 14B to form the top layer of the tread 14. That is, the tread 14 is composed of the top rubber layer 14T forming the top layer thereof and the base rubber layer 14B positioned adjacent to the top rubber layer 14T on the radially inner side of the top rubber layer 14T.

And the ratio between the elastic modulus Mn1 of the rubber (base rubber) forming the base rubber layer 14B at room temperature and the elastic modulus Mn2 thereof at curing (= Mn2/Mn1) is made smaller than the ratio between the elastic modulus Mn3 of the rubber (top rubber) forming the top rubber layer 14T at room temperature and the elastic modulus Mn4 thereof at curing (= Mn4/Mn3). That is, the evaluation value (= (Mn2/Mn1) / (Mn4/Mn3) being smaller than 1 makes the elastic modulus Mn2 of the base rubber at curing smaller than the elastic modulus Mn1 of the base rubber at room temperature, which improves the demolding performance.

In other words, the rubber forming the base rubber layer 14B is a rubber harder at room temperature and softer at curing than the rubber forming the top rubber layer 14T.

It is to be noted that "room temperature" is 10 to 40°C, and 23°C is used herein. This temperature, which is the temperature for ordinary use of tires on icy or snowy roads has much bearing on the anti-stud-loss performance.

Also, "temperature at curing" is 100 to 200°C, and 100° C is used herein. This temperature, which is the temperature immediately after the curing of green rubber, has much bearing on the demolding performance.

To test the demolding performance and anti-stud-loss performance of a plurality of studdable tires, a plurality of test tires featuring different values of "evaluation value = elastic modulus of base rubber at curing (100°C) / elastic modulus of base rubber at room temperature (23°C) / elastic modulus of top rubber at curing (100°C) / elastic modulus of top rubber at room temperature (23°C) = (Mn2/Mn1) / (Mn4/Mn3)" were prepared. And they were subjected to the tests of demolding performance when stud holes 3 are molded in these tires and the tests of anti-stud-loss performance when the studs 2 are fitted in the stud holes 3 in these tires.

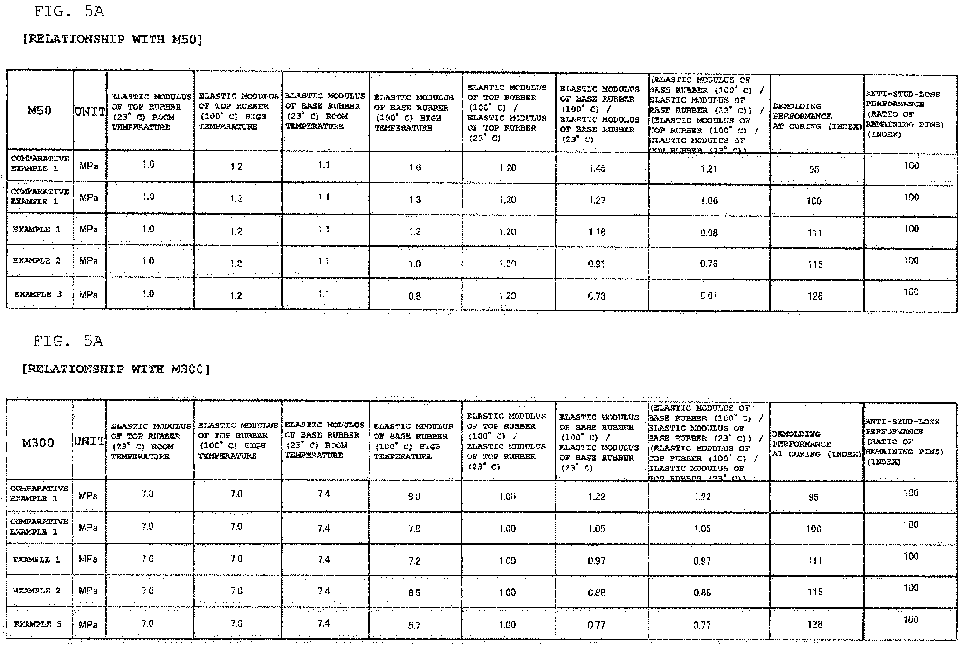

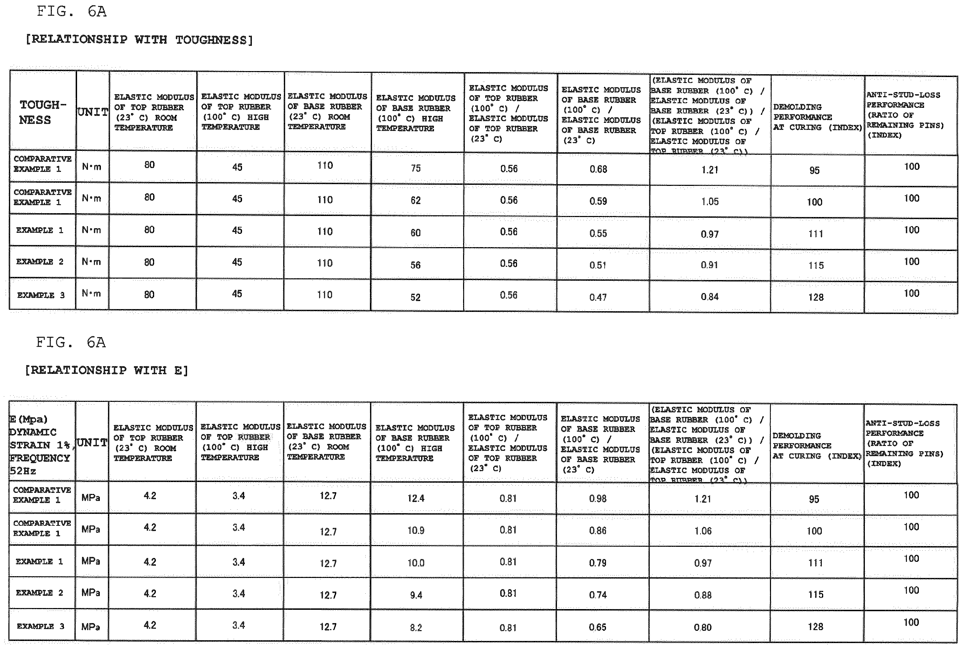

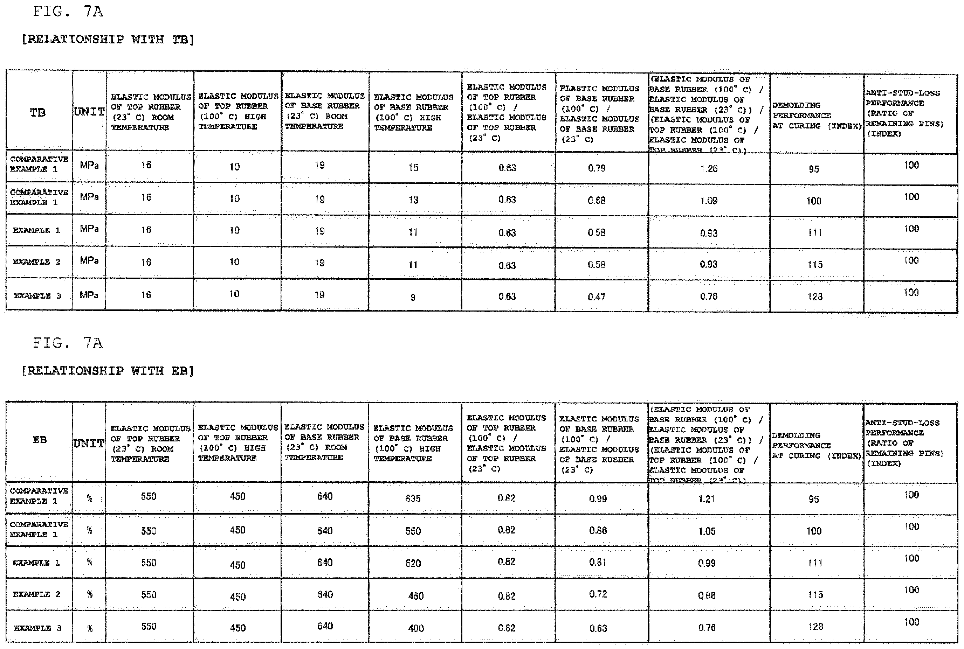

FIG. 5A shows the test results when 50% modulus (M50) is used as the elastic moduli Mn1 to Mn4. FIG. 5B shows the test results when 300% modulus (M300) is used as the elastic moduli Mn1 to Mn4. FIG. 6A shows the test results when toughness TF is used as the elastic moduli Mn1 to Mn4. FIG. 6B shows the test results when dynamic tensile elastic modulus (Young's modulus) E' is used as the elastic moduli Mn1 to Mn4. FIG. 7A shows the test results when tensile strength TB at breaking is used as the elastic moduli Mn1 to Mn4. FIG. 7B shows the test results when elongation EB at breaking is used as the elastic moduli Mn1 to Mn4.

It is to be noted that the demolding performance and the anti-stud-loss performance as shown in FIGS. 5 to 7 are the indices calculated for the tires of Comparative Example 1 and Examples 1 to 3 calculated relative to 100, which represents evaluation results of the demolding performance and the anti-stud-loss performance of the tire of Comparative Example 2. The larger the indices, the better the demolding performance and the anti-stud-loss performance are.

From the test results, it is found that the tire of Comparative Example 1 whose evaluation value = (Mn2/Mn1) / (Mn4/Mn3) is larger than 1 showed the demolding performance lower than that of the tire of Comparative Example 2. On the other hand, the tires of Examples 1 to 3 whose evaluation value = (Mn2/Mn1) / (Mn4/Mn3) is smaller than 1 showed the demolding performance better than that of the tire of Comparative Example 2.

It is to be noted that the demolding performance can be most accurately determined by evaluating the evaluation value = (Mn2/Mn1) / (Mn4/Mn3) using the 50% modulus (M50) as the elastic modulus.

Also, the dynamic tensile elastic modulus E' was measured using the spectrometer of Ueshima Seisakusho under the conditions of dynamic strain of 1% and frequency of 52 Hz. The larger the value of dynamic tensile elastic modulus E', the higher the elasticity is.

Further, for the results of 50% modulus (M50), based on JIS K6251-2010, the 50% tensile stress (50% modulus) was measured as the elastic modulus at room temperature of 23°C of JIS K6250-6.1 (standard temperature of testing laboratory), and the elastic modulus at curing was measured at 100°C selected from JIS K6250-11.2.2 (other testing temperatures).

Also, the boundary surface 14X between the top rubber layer 14T and the base rubber layer 14B was set on the side of the surface 14a of the tread 14 of the boundary position 37 between the opening side part 31 and the bottom side part 32 of the stud hole 3.

More specifically, the position of the boundary surface 14X was set between position X1, which is distance d apart from the hole bottom surface 35 toward the surface 14a of the tread 14, and position X2, which is distance twice d apart from the hole bottom surface 35 toward the surface 14a of the tread 14, in which distance d is the distance between the hole bottom surface 35 and the boundary position 37.

In other words, the boundary surface 14X between the top rubber layer 14T and the base rubber layer 14B is set on the side of the surface 14a of the tread 14 of the position X1, which is the height (= distance d) of the bottom side part 32 from the hole bottom surface 35 of the stud hole 3, and on the side of position X1 of X2, which is positioned twice the height d of the bottom side part 32 from the hole bottom surface 35 toward the surface 14a of the tread 14.

That is, the arrangement is such that the distance d3 between the boundary surface 14X and the boundary position 37 along the central axis 3C of the stud hole 3 is shorter than the height (= distance d) the bottom side part 32 of the stud hole 3 along the central axis 3C.

That is, the rubber selected for forming the base rubber layer 14B is a rubber harder at room temperature and softer at curing than the rubber forming the top rubber layer 14T. This allows the anti-stud-loss performance of a studdable tire 10 used at room temperature to be retained and improves the demolding performance at demolding after tire curing.

Also, the part of a studdable tire 10 with studs 2 fitted in the stud holes 3 which is subject to the greatest stress during usage is the boundary position 37 between the opening side part 31 and the bottom side part 32 of the stud hole 3. In the present embodiment, the boundary surface 14X between the top rubber layer 14T and the base rubber layer 14B was set on the side of the surface 14a of the tread 14 of the boundary position 37 between the opening side part 31 and the bottom side part 32 of the stud hole 3. This means that the boundary surface 14X is not located at the boundary position 37 where the greatest stress works during use of the studdable tire 10, and thus the boundary surface 14X is not subject to large stress. As a result, the rubber does not develop fracture at the boundary surface 14X, and the anti-stud-loss performance improves.

Also, the part which is subject to the greatest stress at demolding is the position on the side of the opening 3t of the stud hole 3 of the position X2, which is the height d of the bottom side part 32 apart from the boundary position 37 between the opening side part 31 and the bottom side part 32 of the stud hole 3. Therefore, the boundary surface 14X is not located at this part, and thus the boundary surface 14X is not subject to large stress at demolding. As a result, the rubber does not develop fracture at the boundary surface 14X, and the demolding performance improves.

In actuality, the part which is subject to the greatest stress at demolding is near the position X2. In this embodiment, therefore, the boundary surface 14X is set on the side of position X1 of the intermediate position between the positions X1 and X2. As a result, it is more difficult for the rubber to develop fracture at the boundary surface 14X, and the demolding performance improves.

As is clear from the description so far, a preferred embodiment of a tire 1 according to the present invention is so arranged as follows. The stud holes 3 for stud insertion provided on the surface 14a side of the tread 14 each have an opening side part 31 opening on the surface 14a of the tread 14 and a bottom side part 32. The value range selected for the ratio C/B between the maximum diameter C of the bottom side part 32 and the diameter B of the middle area 33 is 1.3 ≦ C/B ≦ 1.6. The position 36M of the maximum diameter C of the bottom side part 32 is located on the hole bottom surface 35 side of the intermediate position 39 between the boundary position 37 of the opening side part 31 and the bottom side part 32 and the hole bottom surface 35. And the boundary between the inner peripheral surface (inner wall surface) and the hole bottom surface 35 is formed in a curved surface. The curvature radius R1 of the opening-side curved surface 41 extending along the central axis 3C of the stud hole 3 connecting the boundary position 37 and the maximum diameter C position 36M is greater than the curvature radius R2 of the bottom-side curved surface 42 extending along the central axis 3C of the stud hole 3 connecting the hole bottom surface 35 and the maximum diameter C position 36M. Also, the boundary surface 14X between the top rubber layer 14T and the base rubber layer 14B, which constitute the tread 14, is set on the side of the surface 14a of the tread 14 of the boundary position 37 between the opening side part 31 and the bottom side part 32 of the stud hole 3. And the rubber selected for forming the base rubber layer 14B is a rubber harder at room temperature and softer at curing than the rubber forming the top rubber layer 14T.

It is to be noted that the description thus far has been given of an example of the stud hole 3 having the cross-sectional shape of the inner peripheral surface 36 intersecting with a plane orthogonal to the central axis 3C being a circle. However, the stud hole may have a cross-sectional shape other than a circle. For example, the cross-sectional shape, which is not subject to any particular limitation, may be elliptical, triangular, square, or of other shapes.

Also, the shape of the cross section of the stud hole 3 along the central axis 3C (cross section sectioned by a plane including the central axis 3C of the stud hole 3) may be of different shapes on the left and right with respect to the central axis 3C at the center.

Also, the stud to be used may have a cross-sectional shape orthogonal to the central axis formed in a shape corresponding to the cross-sectional shape of the stud hole.

Also, the top rubber layer and the base rubber layer may each be a layer consisting of a plurality of rubber types, not necessarily a single layer consisting of a single rubber type. This is because the present invention holds its own as long as the top rubber layer and the base rubber layer satisfy the positional relationship of their elastic moduli at the boundary surface where they are adjacent to each other.

Also, it is not necessary that the curvature radius of the opening-side curved surface and the curvature radius of the bottom-side curved surface are each a single curvature radius. That is, the opening-side curved surface and the bottom-side curved surface may each be a curved surface having a plurality of curvature radii and may be a curved surface having straight line portions in parts (e.g., midway, at the starting or ending portion).

The tire according to the present invention has stud holes for stud insertion on the surface side of the tread. The stud holes each have an opening side part on one side along the central axis of the stud hole, which opens on the surface of the tread, and a bottom side part on the other side along the central axis of the stud hole. The inner peripheral surface of the bottom side part is formed in a curved surface swelling outward away from the central axis of the stud hole, and the maximum diameter position of the inner peripheral surface of the bottom side part is located on the hole bottom surface side of the intermediate position between the boundary position of the opening side part and the bottom side part and the hole bottom surface. This makes the curvature radius of the opening-side curved surface along the central axis of the stud hole located between the boundary position and the maximum diameter position greater than the curvature radius of the bottom-side curved surface along the central axis of the stud hole located between the maximum diameter position and the bottom surface of the stud hole. Accordingly, the withdrawal resistance of the stud hole molding projections can be reduced when the stud hole molding projections are pulled out from the opening-side curved surface which has a greater curvature radius in the bottom side part of the stud hole. As a result, it is easier to remove (demold) the stud hole molding projections, which prevents cracks from running in the tread. On the other hand, the bottom-side curved surface with a smaller curvature radius in the bottom side part of the stud hole increases the holding force for holding the flange section of the stud fitted in the stud hole. This makes it harder for the studs to fall out of the stud holes in the studdable tires in use. In other words, a tire featuring both good demolding performance at curing and good anti-stud-loss performance in use can be provided.

Also, the curvature radius of the opening-side curved surface extending along the central axis of the stud hole between the maximum diameter position and the boundary position is set greater than the curvature radius of the bottom-side curved surface extending along the central axis of the stud hole between the maximum diameter position and the hole bottom surface of the stud hole. Accordingly, the withdrawal resistance of the stud hole molding projections can be reduced when the stud hole molding projections are pulled out from the opening-side curved surface which has a greater curvature radius in the bottom side part of the stud hole. As a result, it is easier to remove (demold) the stud hole molding projections, which prevents cracks from running in the tread. On the other hand, the bottom-side curved surface with a smaller curvature radius in the bottom side part of the stud hole increases the holding force for holding the flange section of the stud fitted in the stud hole. This makes it harder for the studs to fall out of the stud holes in the studdable tires in use.

### Description of Referance Numerals

- 1: tire
- 2: stud
- 3: stud hole
- 3C: central axis
- 3t: opening
- 14: tread
- 14a: surface of tread
- 31: opening side part
- 32: bottom side part
- 35: hole bottom surface
- 36: inner peripheral surface
- 36M: maximum diameter position
- 37: boundary position
- 41: opening-side curved surface
- 42: bottom-side curved surface
- C: maximum diameter

## Claims

1. A tire (1) having:
a tread (14) with stud holes (3) for stud (2) insertion on the surface side thereof,
wherein, when studs are not inserted into the stud holes (3), the stud holes (3) each have an opening side part (31) on one side along the central axis (3C) thereof, which opens on the surface (14a) of the tread (14), and a bottom side part (32) on the other side along the central axis (3C) thereof,
wherein an inner peripheral surface (36) of the bottom side part (32) is formed in a curved surface swelling outward away from the central axis (3C) of the stud hole (3),
wherein the maximum diameter position (36M) of the inner peripheral surface (36) of the bottom side part (32) is located on the hole bottom surface (35) side of the intermediate position (39) between the boundary position (37) of the opening side part (31) and the bottom side part (32) and the hole bottom surface (35),
wherein the curvature radius (R1) of a curved surface (41) on the opening side, which is a curved surface (41) extending along the central axis (3C) of the stud hole (3) positioned between the maximum diameter position (36M) and the boundary position (37) is greater than the curvature radius (R2) of a curved surface (42) on the bottom side, which is a curved surface (42) extending along the central axis (3C) of the stud hole (3) positioned between the maximum diameter position (36M) and the hole bottom surface (35) of the stud hole (3),
**characterised in that**:
the opening side part (31) has an opening area (34) formed in an inverted cone shape whose diameter reduces gradually from the surface (14a) side of the tread (14) toward the hole bottom surface (35) of the stud hole (3) and the opening diameter of the opening (3t) of the opening area (34) is larger than the cross-sectional diameter of the bottom side part (32).

## Patentansprüche

1. Reifen (1), der Folgendes aufweist:
eine Lauffläche (14) mit Spikelöchern (3) zum Einsetzen von Spikes (2) auf der Oberflächenseite derselben,
wobei, wenn keine Spikes in die Spikelöcher (3) eingesetzt sind, die Spikelöcher (3) jeweils einen öffnungsseitigen Teil (31) auf der einen Seite entlang der Mittelachse (3C) derselben, der sich auf der Oberfläche (14a) der Lauffläche (14) öffnet und einen sohlenseitigen Teil (32) auf der anderen Seite entlang der Mittelachse (3C) derselben, aufweisen,
wobei eine innere Umfangsfläche (36) des sohlenseitigen Teils (32) in einer gekrümmten Fläche geformt ist, die von der Mittelachse (3C) des Spikelochs (3) weg nach außen anschwillt,
wobei die Position des maximalen Durchmessers (36M) der inneren Umfangsfläche (36) des sohlenseitigen Teils (32) auf der Seite der Lochsohlenfläche (35) der Zwischenposition (39) zwischen der Begrenzungsposition (37) des öffnungsseitigen Teils (31) und des sohlenseitigen Teils (32) und der Lochsohlenfläche (35) angeordnet ist,
wobei der Krümmungsradius (R1) einer gekrümmten Fläche (41) auf der Öffnungsseite, die eine gekrümmte Fläche (41) ist, die sich entlang der Mittelachse (3C) des Spikelochs (3) befindet, wobei sie zwischen der Position des maximalen Durchmessers (36M) und der Begrenzungsposition (37) angeordnet ist, größer ist als der Krümmungsradius (R2) einer gekrümmten Fläche (42) auf der Sohlenseite, die eine gekrümmte Fläche (42) ist, die sich entlang der Mittelachse (3C) des Spikelochs (3) erstreckt, wobei sie zwischen der Position des maximalen Durchmessers (36M) und der Lochsohlenfläche (35) des Spikelochs (3) angeordnet ist,
**dadurch gekennzeichnet, dass**
der öffnungsseitige Teil (31) einen Öffnungsbereich (34) aufweist, der in einer umgekehrten Kegelform ausgebildet ist, deren Durchmesser sich allmählich von der Seite der Oberfläche (14a) der Lauffläche (14) zu der Lochsohlenfläche (35) des Spikelochs (3) hin verringert, und der Öffnungsdurchmesser der Öffnung (3t) des Öffnungsbereichs (34) größer ist als der Querschnittsdurchmesser des sohlenseitigen Teils (32).

## Revendications

1. Bandage pneumatique (1), comportant :
une bande de roulement (14) avec des trous à crampons (13) en vue de l'insertion de crampons (2) dans son côté de surface,
dans lequel, lorsque des crampons ne sont pas insérés dans les trous à crampons (3), les trous à crampons (3) comportent chacun une partie du côté d'ouverture (31), sur un côté le long de son axe central (3C), s'ouvrant sur la surface (14a) de la bande de roulement (14), et une partie du côté inférieur (32) sur l'autre côté le long de son axe central (3C),
dans lequel une surface périphérique interne (36) de la partie du côté inférieur (32) est formée dans une surface courbée bombée vers l'extérieur, à l'écart de l'axe central (3C) du trou à crampons (3),
dans lequel la position à diamètre maximal (36M) de la surface périphérique interne (36) de la partie du côté inférieur (32) est située sur la surface du côté du fond du trou (35) de la position intermédiaire (39) entre la position limite (37) de la partie du côté d'ouverture (31) et la partie du côté inférieur (32) et la surface du fond du trou (35),
dans lequel le rayon de courbure (R1) d'une surface courbée (41) sur le côté d'ouverture, constituant une surface courbée (41) s'étendant le long de l'axe central (3C) du trou à crampons (3) positionnée entre la partie à diamètre maximal (36M) et la position limite (37), est supérieur au rayon de courbure (R2) d'une surface courbée (42) sur le côté inférieur, constituant une surface courbée (42) s'étendant le long de l'axe central (3C) du trou à crampons (3), positionnée entre la position à diamètre maximal (36M) et la surface du fond du trou (35) du trou à crampons (3),
**caractérisé en ce que** :
la partie du côté d'ouverture (31) comporte une surface d'ouverture (34) formée dans une forme de cône inversé, dont le diamètre est réduit progressivement du côté de la surface (14a) de la bande de roulement (14) vers la surface du fond du trou (35) du trou à crampons (3), le diamètre d'ouverture de l'ouverture (3t) de la surface d'ouverture (34) étant supérieur au diamètre de section transversale de la partie du côté inférieur (32).
